# EUROPEAN PATENT SPECIFICATION

(11) **EP 2 741 394 B1**
(45) Date of publication and mention of the grant of the patent: **06.04.2016**
(21) Application number: 13152782.2
(22) Date of filing: 25.01.2013
(51) Int. Cl.: H02J 7/02, H02J 7/04

(54) **High-efficiency battery charger**
Hocheffizientes Batterieladegerät
Chargeur de batterie à haut rendement

(30) Priority: 05.12.2012 US 201261733700 P
(43) Date of publication of application: 11.06.2014
(73) Proprietor: Shum, Henry, Hong Kong 626-628 (CN); Inskeep, Matthew, Boca Raton, FL (US)
(72) Inventor: Shum, Henry, Hong Kong 626-628 (CN); Inskeep, Matthew, Boca Raton, FL (US)
(74) Representative: Nederlandsch Octrooibureau

(56) References cited:
- US-A- 4 672 295
- US-A- 5 166 595
- US-A1- 2003 141 845
- US-A1- 2009 079 394

## Description

### TECHNICAL FIELD

The present invention related generally to a battery charger, and, particularly, to a battery charger which can operate with high efficiency in various circumstances.

### BACKGROUND

Linear style battery chargers are well-known in the art. Recently, multifrequency and high-frequency battery chargers have entered the market and proven effective at providing charge energy to various types of batteries at a much increased efficiency. However, both types of battery chargers suffer from several significant drawbacks.

Generally, a large transformer provides more current than a smaller transformer, but also experiences greater electrical losses as it operates. Relatively large transformers are needed in order to provide the high current necessary to charge a battery. However, when a battery is fully charged, float charging or trickle charging the battery to maintain its charge only requires a relatively low current. Battery chargers which use only one transformer must select a large transformer in order to provide the high current necessary, but must endure the high losses of the large transformer even when providing only a maintenance charge. Using multiple transformers does little to remedy this if all of the transformers remain active and connected, as transformers experience electrical power loss even when they are not providing current.

In US4672295, a high efficiency battery charger is disclosed, comprising a first transformer to produce a charging current and having a first output to couple the charging current to a depleted battery; a second transformer to produce maintenance current lower than the charging current. The second transformer comprises a second output to couple the maintenance current to a charged battery. Moreover, the charger comprises a power feed circuit having an input for connection to a power source and an output connected to respective ones of the first and second transformers.

Additionally, prior art references US2003/0141845, US2009/079394 and US5166595 disclose different battery chargers comprising transformers and other parts to be connected to a battery.

### SUMMARY

According to an exemplary embodiment of the present invention, a high efficiency battery charger is disclosed, comprising a first transformer to produce a charging current and having a first output to couple the charging current to a depleted battery; a second transformer to produce a maintenance current lower than the charging current, the second transformer having a second output to couple the maintenance current to a charged battery; a power feed circuit having an input for connection to a power source and an output connected to respective ones of the first and second transformers; characterized in that it further comprises a control circuitry having an input coupled to the first and second outputs and an output coupled to the power feed circuitry, wherein the control circuitry is configured to detect a depleted battery to cause the power feed circuitry to feed power to the first transformer while disabling the second transformer and to detect a charged battery to cause the power feed circuitry to feed power to the second transformer while disabling the first transformer.

According to another exemplary embodiment, a high-efficiency battery charger as defined in any of the dependent claims 2 to 7 is provided.

According to a still further exemplary embodiment, a method for operating a high-efficiency battery charger as defined in claim 8 is provided.

Further aspects, objectives, and advantages, as well as the structure and function of embodiments, will become apparent from a consideration of the description, drawings and examples.

### BRIEF DESCRIPTION OF THE DRAWINGS

The features and advantages of the invention will be apparent from the following drawings wherein like reference numbers general indicate identical, functionally similar, and/or structurally similar elements.
FIG. 1 is a block diagram of a high efficiency battery charger according to an embodiment of the invention;
FIG. 2 is a flow chart of the operation of a high efficiency battery charger according to an embodiment of the invention.

### DETAILED DESCRIPTION

Embodiments of the invention as discussed in detail below. In describing embodiments, specific terminology is employed for the sake of clarity. However, the invention is not intended to be limited to the specific terminology so selected. A person skilled in the relevant art will recognize that other equivalent parts can be employed and other methods developed without departing from the scope of the invention.

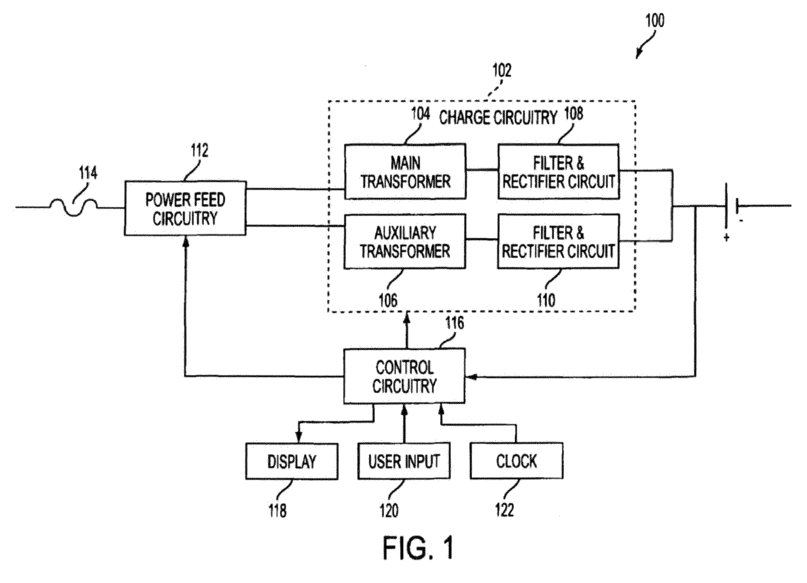

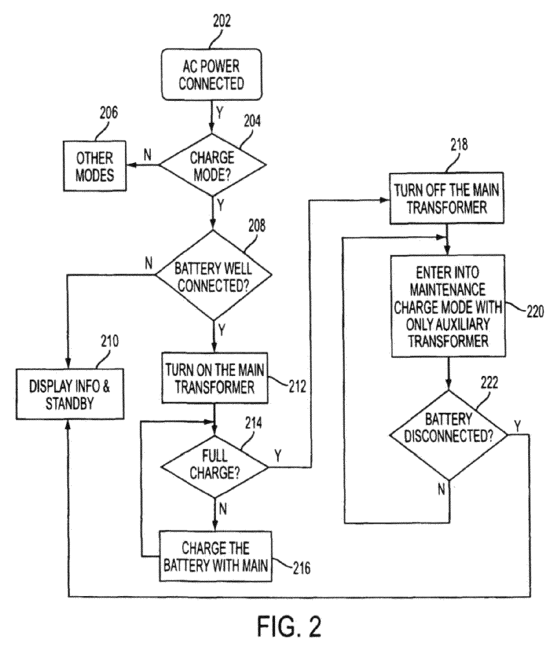

Generally, Figures 1 and 2 relate to a high-efficiency battery charger 100. The high-efficiency battery charger 100 can include two or more independently operable transformers in its charging circuitry. The transformers can be optimized for different situations, allowing high-efficiency battery charger 100 to remain efficient across a variety of modes of operation.

Figure 1 shows an exemplary embodiment of a high-efficiency battery charger 100. High-efficiency battery charger 100 includes charging circuitry 102. Charging circuitry 102 includes first and second transformers, for example main transformer 104 and auxiliary transformer 106. The transformers of charging circuitry 102 can be any type of transformer, for example linear transformers, high-frequency transformers, or any other type of transformers as desired, and any combination thereof. The transformers of charging circuitry 102 can have any desired configuration, for example and desired size or shape. In some exemplary embodiments, the transformers of charging circuitry 102 can include, for example, E-E type core shapes, or E-I type core shapes, or any desired combination thereof. The size of the transformers in charging circuitry 102 can be understood in any desired terms, for example physical size. The size of the transformers in charging circuitry 102 can also be understood in terms of maximum power output capacity, or kilovolt-ampere (KVA) rating, in which a higher KVA rating for a specific input and output voltage indicated a larger transformer, as is well-known in the art.

In some exemplary embodiments, main transformer 104 and auxiliary transformer 106 can have different configurations, for example different shapes or sizes. In some exemplary embodiments, main transformer 104 can be larger that auxiliary transformer 106. For example, auxiliary transformer 104 can be an E-E or E-I type transformer with a core diameter in the range of 12mm-16mm, and main transformer can be an E-E or E-I type transformer with a core diameter in the range of 28mm-55mm, or even larger as desired. As a result, main transformer 104 can be capable of providing more current than auxiliary transformer 106, but can also be subject to higher energy losses during operation. As an example, in some embodiments main transformer 104 can provide current in a range of approximately 1 ampere to approximately 100 amperes, and auxiliary transformer 106 can provide current in a range of approximately 1 amperes to approximately 2 amperes. In further exemplary embodiments, main transformer 104 can also provide a boost current in a range of approximately 50 amperes to approximately 400 amperes.

Charging circuitry 102 can also include filter and rectifier circuits, for example filter and rectifier circuits 108 and 110, which can be coupled to main transformer 104 and auxiliary transformer 106, respectively. As an example, the rectifiers in the filter and rectifier circuits of charging circuitry 102 can be any desired number of diodes, for example one diode or four diodes. Additionally, the filters in the filter and rectifier circuits of charging circuitry 102 can be one or more capacitors or inductors, in any desired combination. The filter and rectifier circuits of charging circuitry 102 can be configured to rectify and condition the alternating current output of the transformers of charging circuitry 102 so that it is suitable for charging a battery, as is well-known to one skilled in the art.

Still referring to Figure 1, high-efficiency battery charger 100 also includes power feed circuitry 112 and power source 114. Power source 112 can be any source of electrical power, for example a standard wall socket providing alternating current power. Power feed circuitry 112 can receive input from power source 114 and can filter or otherwise condition it in order to provide suitable output for charge circuitry 102. If, for example, one or more of the transformers of charging circuitry 102 is a high-frequency transformer, for example as known from U.S. Patent No. 6,822,425, the power feed circuitry 112 can include one or more switches suitable to drive the high-frequency transformers. The switches can be any type of switch desired. In some exemplary embodiments, the switches can be field effect transistor (FET) switches, and can be controlled with pulse width modulation (PWM) controllers, as is well-known to one skilled in the art. Power feed circuitry 112 can selectively provide suitable output to any of the transformers of charge circuitry 102, alone or in combination. Power feed circuitry 112 can also disconnect transformers from power source 114 when the transformers are not in use. This can reduce the overall amount of electrical power loss in high-efficiency battery charger 100, as transformers generally experience electrical power loss whenever they are connected to a power source. In some exemplary embodiments, power feed circuitry 112 can isolate charge circuitry 102 from power source 114 using, for example, opto-couplers, opto-isolators, isolating transformers, or any other desired technique, as is well-known to one skilled in the art.

Again referring to Figure 1, high-efficiency battery charger 100 includes control circuitry 116. Control Circuitry 116 can be logic circuitry, can be programmable, such as a central processing unit (CPU) with associated memory, or can be any other desired type of control circuitry or combination thereof. Control Circuitry 116 can include any type of control circuitry as desired, for example integrated circuits such as power management circuits or PWM controllers, or can be discreet logic components, as desired. Control circuitry 116 can receive input from and provide control output to any other component of high-efficiency battery charger 100, as desired. For example, control circuitry 116 can accept clock input from clock 122. Control circuitry 116 can also receive input relating to information regarding the state of the battery connected to high-efficiency battery charger 100, for example battery type, battery connection status, or battery polarity. Control circuitry 116 can also receive input regarding the status of high-efficiency battery charger 100, for example operating mode, transformer operation status, power supply voltage, battery voltage, charging voltage, charging current, frequency, engine start detection, the amount of time any of the above has been applied or has left to be applied, or any other information as desired.

In some exemplary embodiments, control circuitry 116 can also accept input from user input 120. User input 120 can be one or more buttons, switches, keyboards, dials, or any other type of input as desired. User input 120 can allow a user to provide information regarding the operation of high-efficiency battery charger 100, for example battery type, battery size, battery voltage, power source type, or any other information as desired. User input 120 can allow a user to make selections regarding the desired function of high-efficiency battery charger 100, for example desired operating mode, transformer operation status, power supply voltage, charging voltage, charging current, frequency, amount of time desired for any function, or any other function as desired. Control circuitry 116 can make use of the inputs received to provide output to other components of high-efficiency battery charger 100. For example, control circuitry 116 can provide control output to display 118. Display 118 can be any type of display, for example one or more cathode ray tubes (CRT), light-emitting diodes (LED), electroluminescent displays (ELD), electronic paper or E-Ink displays, plasma display panels (PDP), liquid crystal displays (LCD), or any other type of display as desired. Display 118 can display any type of information relating to the function of high-efficiency battery charger 100, for example operating mode, battery type, battery connection status, battery polarity, power supply voltage, battery voltage, charging voltage, charging current, frequency, engine start detection, the amount of time any of the above has been applied or has left to be applied, or any other information as desired. Control circuitry 116 can also provide control output to power feed circuitry 112 and charge circuitry 102. In some exemplary embodiments, control circuitry 116 can instruct power feed circuitry to provide power from power source 114 to one of the transformers of charger circuitry 102 and to disconnect the rest of the transformers of charge circuitry 102. This can reduce the overall amount of electrical power loss in high-efficiency battery charger 100, as transformers generally experience electrical power loss whenever they are connected to a power source.

In some exemplary embodiments, high-efficiency battery charger 100 can also include any other components, as desired, for example fans or other cooling devices.

High-efficiency battery charger 100 can operate according to any desired protocol. High-efficiency battery charger 100 can operate in one or more modes, for example charge mode and maintenance charge mode. In some exemplary embodiments, when high-efficiency battery charger 100 is in charge mode, control circuitry 116 can instruct power feed circuitry 112 to provide power to main transformer 104 while disconnecting auxiliary transformer 106. In further exemplary embodiments, when high-efficiency battery charger 100 is in maintenance charge mode, control circuitry 116 can instruct power feed circuitry 112 to provide power to auxiliary transformer 106 while disconnecting main transformer 104. In this way, high-efficiency battery charger 100 can enter charge mode when the high current which can be provided by main transformer 104 is required, and can enter maintenance charge mode to provide a low-loss no-load, float, or trickle charge from auxiliary transformer 106 when the high losses associated with main transformer 104 are not desirable. Turning now to Figure 2, an exemplary embodiment of a protocol for operating high-efficiency battery charger 100 is shown. At step 202, control circuitry 116 can determine that AC power source 114 has been connected to power feeds 112. At step 204, control circuitry can determine which mode has been selected based on user input 120. If charge mode has not been selected, high-efficiency battery charger 100 can enter another mode at step 206. If charge mode has been selected, control circuitry 116 can determine at step 208 whether the battery is properly connected. If the battery is not properly connected, for example the polarities are reversed at clamps connecting the charger to battery terminals, control circuitry 116 can move to step 110 and instruct display 118 to display this information and stand by for further user input. If the battery is well-connected, control circuitry 116 can, at step 212, instruct power feed circuitry 112 to provide power from the power source 114 to main transformer 104 while disconnecting auxiliary transformer 106. At step 214, control circuitry 116 can determine whether the battery is fully charged. If the battery is not fully charged, high-efficiency battery charger 100 can continue charging the battery with main transformer 104 and return to step 214. If the battery is fully charged, control circuitry 116 can proceed to step 218 and instruct power feed circuitry 112 to disconnect main transformer 104. The control circuitry 116 can then, at step 220, charge the battery in maintenance charge mode using only auxiliary transformer 106, and can do so at step 222 until the battery is disconnected.

In other exemplary embodiments, high-efficiency battery charger 100 can use any protocol as desired. For example, high-efficiency battery charger 100 can enter charge mode for an amount of time set by the user, or on a schedule specified by the user. High-efficiency battery charger 100 can switch from charge mode to maintenance charge mode when the battery is detected to be full, when the battery has reached a pre-determined voltage, or under any other desired conditions.

The embodiments illustrated and discussed in this specification are intended only to teach those skilled in the art the best way known to the inventors to make and use the invention. Nothing in this specification should be considered as limiting the scope of the present invention. All examples presented are representative and non-limiting. The above-described embodiments of the invention may be modified or varied, without departing from the invention, as appreciated by those skilled in the art in light of the above teachings. It is therefore to be understood that, within the scope of the claims and their equivalents, the invention may be practiced otherwise than as specifically described.

## Claims

1. A high efficiency battery charger (100), comprising:
A first transformer (104) to produce a charging current and having a first output to couple the charging current to a depleted battery;
A second transformer (106) to produce a maintenance current lower than the charging current, the second transformer having a second output to couple the maintenance current to a charged battery;
A power feed circuit (112) having an input for connection to a power source and an output connected to respective ones of the first and second transformers;
**characterized in that** it further comprises a control circuitry (116) having an input coupled to the first and second outputs and an output coupled to the power feed circuitry (112), wherein the control circuitry is configured to detect a depleted battery to cause the power feed circuitry to feed power to the first transformer while disabling the second transformer and to detect a charged battery to cause the power feed circuitry to feed power to the second transformer while disabling the first transformer.

2. A high-efficiency battery charger (100) according to claim 1, wherein it further comprises:
a power source (114);
the first and second transformers (104, 106) providing power to a battery, wherein the first transformer (104) is larger than the second transformer (106);
wherein the power feed circuitry is configured to selectively provide power from the power source to one of the first and the second transformers (104, 106) while disconnecting the rest of the first and the second transformers (104, 106) from the power source; and
wherein the control circuitry (116) is configured to instruct the power feed circuitry (112) to selectively provide power to the first transformer (104) when high current is required, and to the second transformer (106) when high current is not required.

3. The high efficiency battery charger (100) according to claim 1, wherein the first transformer (104) provides current in a range of about 1 ampere to 100 amperes.

4. The high efficiency battery charger (100) according to claim 1, wherein the first transformer (104) provides current in a range of about 50 amperes to 400 amperes.

5. The high efficiency battery charger (100) according to any one of the claims 1-4, wherein the second transformer (106) provides current in a range of about 1 ampere to 2 amperes.

6. The high efficiency battery charger (100) according to any one of the claims 1-5, wherein the first transformer (104) can be a E-E or E-I type transformer with a core diameter in the range of 28mm-55mm.

7. The high efficiency battery charger (100) according to any one of the preceding claims, wherein the second transformer (106) can be a E-E or E-I type transformer with a core diameter in the range of 12mm-16mm.

8. A method for operating a high-efficiency battery charger (100) according to any one of the preceding claims, the method comprising:
connecting the first transformer (104) to a power source (114) while the second transformer (106) is disconnected from the power source (114);
charging the battery using the first transformer (104) that is larger than the second transformer (106);
determining whether the battery is fully charged;
disconnecting the first transformer (104) when the battery is determined to be fully charged; and connecting the second transformer (106) to the power source (114) for providing a maintenance charge to the battery while the first transformer (104) is disconnected.

## Patentansprüche

1. Hocheffizientes Batterieladegerät (100), umfassend:
einen ersten Transformator (104) zur Erzeugung eines Ladestroms, der einen ersten Ausgang zur Koppelung des Ladestroms mit einer entladenen Batterie aufweist;
einen zweiten Transformator (106) zur Erzeugung eines Erhaltungsstroms, der geringer als der Ladestrom ist, wobei der zweite Transformator einen zweiten Ausgang zur Koppelung des Erhaltungsstroms mit einer geladenen Batterie aufweist;
eine Energieeinspeisungsschaltung (112) mit einem Eingang zur Verbindung mit einer Energiequelle und einem Ausgang, der mit jeweiligen einzelnen des ersten und zweiten Transformators verbunden ist;
**dadurch gekennzeichnet, dass** es ferner einen Steuerschaltkreis (116) umfasst, der einen Eingang, welcher mit dem ersten und zweiten Ausgang gekoppelt ist, und einen Ausgang, welcher mit dem Energieeinspeisungsschaltkreis (112) verbunden ist, aufweist, wobei der Steuerschaltkreis ausgestaltet ist, eine entladene Batterie zu erkennen, um zu veranlassen, dass der Energieeinspeisungsschaltkreis dem ersten Transformator Energie zuführt, während der zweite Transformator deaktiviert wird, und eine geladene Batterie zu erkennen, um zu veranlassen, dass der Energieeinspeisungsschaltkreis dem zweiten Transformator Energie zuführt, während der erste Transformator deaktiviert wird.

2. Hocheffizientes Batterieladegerät (100) nach Anspruch 1, wobei es ferner Folgendes umfasst:
eine Energiequelle (114);
wobei der erste und der zweite Transformator (104, 106) einer Batterie Energie bereitstellen, wobei der erste Transformator (104) größer als der zweite Transformator (106) ist;
wobei der Energieeinspeisungsschaltkreis ausgestaltet ist, wahlweise einem einzelnen des ersten und zweiten Transformators (104, 106) Energie von der Energiequelle bereitzustellen, während der verbleibende des ersten und zweiten Transformators (104, 106) von der Energiequelle getrennt wird; und
wobei der Steuerschaltkreis (116) ausgestaltet ist, den Energieeinspeisungsschaltkreis (112) anzuweisen, wahlweise dem ersten Transformator (104) Energie bereitzustellen, wenn Hochstrom gefordert wird, und dem zweiten Transformator (106) Energie bereitzustellen, wenn kein Hochstrom gefordert wird.

3. Hocheffizientes Batterieladegerät (100) nach Anspruch 1, wobei der erste Transformator (104) Strom in einem Bereich von etwa 1 Ampere bis 100 Ampere bereitstellt.

4. Hocheffizientes Batterieladegerät (100) nach Anspruch 1, wobei der erste Transformator (104) Strom in einem Bereich von etwa 50 Ampere bis 400 Ampere bereitstellt.

5. Hocheffizientes Batterieladegerät (100) nach einem der Ansprüche 1 - 4, wobei der zweite Transformator (106) Strom in einem Bereich von etwa 1 Ampere bis 2 Ampere bereitstellt.

6. Hocheffizientes Batterieladegerät (100) nach einem der Ansprüche 1 - 5, wobei der erste Transformator (104) ein Transformator vom E-E- oder E-I-Typ mit einem Kerndurchmesser im Bereich von 28 mm - 55 mm sein kann.

7. Hocheffizientes Batterieladegerät (100) nach einem der vorangehenden Ansprüche, wobei der zweite Transformator (106) ein Transformator vom E-E-oder E-I-Typ mit einem Kerndurchmesser im Bereich von 12 mm - 16 mm sein kann.

8. Verfahren zum Betreiben eines hocheffizienten Batterieladegeräts (100) nach einem der vorangehenden Ansprüche, umfassend:
das Verbinden eines ersten Transformators (104) mit einer Energiequelle (114), während der zweite Transformator (106) von der Energiequelle (114) getrennt ist;
das Laden der Batterie unter Nutzung des ersten Transformators (104), der größer als der zweite Transformator (106) ist;
das Feststellen, ob die Batterie vollständig geladen ist;
das Trennen des ersten Transformators (104), wenn festgestellt wird, dass die Batterie vollständig geladen ist;
und das Verbinden des zweiten Transformators (106) mit der Energiequelle (114) zum Bereitstellen einer Erhaltungsladung für die Batterie, während der erste Transformator (104) getrennt ist.

## Revendications

1. Chargeur de batterie à haute efficacité (100), comprenant :
un premier transformateur (104) pour produire un courant de charge et comportant une première sortie pour coupler le courant de charge à une batterie déchargée ;
un deuxième transformateur (106) pour produire un courant d'entretien inférieur au courant de charge, le deuxième transformateur comportant une deuxième sortie pour coupler le courant d'entretien à une batterie chargée ;
un circuit de source de puissance (112) comportant une entrée pour une connexion à une source de puissance et une sortie connectée à des transformateurs respectifs parmi les premier et deuxième transformateurs ;
**caractérisé en ce qu'**il comprend en outre des éléments de circuit de commande (116) comportant une entrée couplée aux première et deuxième sorties et une sortie couplée aux éléments de circuit de source de puissance (112), dans lequel les éléments de circuit de commande sont configurés pour détecter une batterie déchargée pour amener les éléments de circuit de source de puissance à fournir une puissance au premier transformateur tout en désactivant le deuxième transformateur et pour détecter une batterie chargée pour amener les éléments de circuit de source de puissance à fournir une puissance au deuxième transformateur tout en désactivant le premier transformateur.

2. Chargeur de batterie à haute efficacité (100) selon la revendication 1, dans lequel il comprend en outre :
une source de puissance (114) ;
des premier et deuxième transformateurs (104, 106) fournissant une puissance à une batterie, dans lequel le premier transformateur (104) est plus grand que le deuxième transformateur (106) ;
dans lequel les éléments de circuit de source de puissance sont configurés pour fournir de manière sélective une puissance de la source de puissance à l'un des premier et deuxième transformateurs (104, 106) tout en déconnectant le transformateur restant parmi les premier et deuxième transformateurs (104, 106) de la source de puissance ; et
dans lequel les éléments de circuit de commande (116) sont configurés pour ordonner aux éléments de circuit de source de puissance (112) de fournir de manière sélective une puissance au premier transformateur (104) lorsqu'un courant élevé est nécessaire, et au deuxième transformateur (106) lorsqu'un courant élevé n'est pas nécessaire.

3. Chargeur de batterie à haute efficacité (100) selon la revendication 1, dans lequel le premier transformateur (104) fournit un courant dans une plage d'environ 1 ampère à 100 ampères.

4. Chargeur de batterie à haute efficacité (100) selon la revendication 1, dans lequel le premier transformateur (104) fournit un courant dans une plage d'environ 50 ampères à 400 ampères.

5. Chargeur de batterie à haute efficacité (100) selon l'une quelconque des revendications 1 à 4, dans lequel le deuxième transformateur (106) fournit un courant dans une plage d'environ 1 ampère à 2 ampères.

6. Chargeur de batterie à haute efficacité (100) selon l'une quelconque des revendications 1 à 5, dans lequel le premier transformateur (104) peut être un transformateur de type E-E ou E-I avec un diamètre de noyau dans la plage de 28 mm à 55 mm.

7. Chargeur de batterie à haute efficacité (100) selon l'une quelconque des revendications précédentes, dans lequel le deuxième transformateur (106) peut être un transformateur de type E-E ou E-I avec un diamètre de noyau dans la plage de 12 mm à 16 mm.

8. Procédé pour mettre en oeuvre un chargeur de batterie à haute efficacité (100) selon l'une quelconque des revendications précédentes, le procédé comprenant :
la connexion du premier transformateur (104) à une source de puissance (114) alors que le deuxième transformateur (106) est déconnecté de la source de puissance (114) ;
a charge de la batterie en utilisant le premier transformateur (104) qui est plus grand que le deuxième transformateur (106) ;
la détermination si la batterie est totalement chargée ;
la déconnexion du premier transformateur (104) lorsqu'il est déterminé que la batterie est totalement chargée ; et la connexion du deuxième transformateur (106) à la source de puissance (114) pour fournir une charge d'entretien à la batterie alors que le premier transformateur (104) est déconnecté.
